Europäisches Patentamt

European Patent Office

Office européen des brevets

(19)

(11) Veröffentlichungsnummer : **0 012 847**
**B1**

(12) **EUROPÄISCHE PATENTSCHRIFT**

(45) Veröffentlichungstag der Patentschrift :
09.06.82

(21) Anmeldenummer : 79104623.8

(22) Anmeldetag : 21.11.79

(51) Int. Cl.³ : **B 60 S 1/40**

(54) **Wischvorrichtung für Scheiben von Kraftfahrzeugen.**

(30) Priorität : 23.12.78 DE 2856111

(43) Veröffentlichungstag der Anmeldung :
09.07.80 (Patentblatt 80/14)

(45) Bekanntmachung des Hinweises auf die Patenterteilung : 09.06.82 Patentblatt 82/23

(84) Benannte Vertragsstaaten :
**BE DE FR GB IT**

(56) Entgegenhaltungen :
**DE A 2 020 724**
**DE A 2 613 439**
**DE A 2 811 330**
**DE B 2 050 925**
**DE B 2 354 833**

(73) Patentinhaber : **ROBERT BOSCH GMBH**
**Postfach 50**
**D-7000 Stuttgart 1 (DE)**

(72) Erfinder : **Mayer, Jürgen**
**August-Euler-Weg 3**
**D-7560 Gaggenau (DE)**

**EP 0 012 847 B1**

Imprimerie Jouve, 18, rue St-Denis, 75001 Paris, France

## Wischvorrichtung für Scheiben von Kraftfahrzeugen

### Stand der Technik

Die Erfindung geht aus von einer Wischvorrichtung nach der Gattung des Hauptanspruchs. Es ist schon eine Wischvorrichtung bekannt (DE-A-28 11 330), bei der in den U-Schenkeln des Wischblatt-Gestellteils lediglich die zum Anschließen des Wischblatts am Wischerarm notwendigen Lagerbohrungen zum Aufnehmen des Gelenkbolzens vorhanden sind. Bei dieser Wischvorrichtung wird das die axiale Sicherung des Gelenkbolzens bewirkende Bauteil zu diesem Zweck direkt auf den Gelenkbolzen aufgerastet. Wenn das Wischblatt vom Wischerarm gelöst werden soll, muß also dieses Bauteil entfernt werden.

### Vorteile der Erfindung

Die erfindungsgemäße Wischvorrichtung mit den kennzeichnenden Merkmalen des Hauptanspruchs hat demgegenüber den Vorteil, daß die Halterung für das Bauteil von der Sicherung für den Gelenkbolzen getrennt ist. Das Bauteil kann also auch dann mit dem von den U-Schenkeln gehaltenen Bolzen verbunden bleiben, wenn das Wischblatt vom Wischerarm gelöst wird. Damit wird einem Verlieren des Bauteils vorgebeugt.

Weiter kann der mit den U-Schenkeln des Bauteils festverbundene Bolzen zum Anschließen des Wischblatts an einem Wischerarm benutzt werden, der an seinem Anschlußende hakenförmig ausgebildet ist und der mit diesem Haken den Bolzen umgreift. Der Bolzen dient dabei als Gelenkachse, auch für die in diesem Fall verwendete haarnadelförmige Rastfeder, durch welche die Sicherung zwischen Wischblatt und Wischerarm hergestellt wird.

### Zeichnung

Ein Ausführungsbeispiel der Erfindung ist in der Zeichnung dargestellt und in der nachfolgenden Beschreibung näher erläutert.

Es zeigen

Figur 1 ein Wischblatt in Ansicht,

Figur 2 eine Draufsicht auf das Wischblatt gemäß Fig. 1 in vergrößerter Darstellung, mit strichpunktiert eingezeichneten Wischarm,

Figur 3 eine vergrößerte Ansicht eines Bauteils zum lösbaren Verrasten mit dem Gelenkbolzen,

Figur 4 eine Draufsicht auf das Bauteil gemäß Fig. 3,

Figur 5 einen Schnitt durch das Bauteil entlang der Linie V-V in Fig. 3,

Figur 6 eine Ansicht eines Gelenkbolzens in vergrößerter Darstellung,

Figur 7 einen Teilschnitt entlang der Linie VII-VII in Fig. 2 in vergrößerter Darstellung durch das auf den Gelenkbolzen aufgesteckte Wischblatt, wobei das Bauteil zum Verrasten des Wischblatts noch nicht in Raststellung gelangt ist,

Figur 8 einen Schnitt durch die Anordnung gemäß Fig. 7 entlang der Linie VIII-VIII,

Figur 9 einen Teilschnitt gemäß Fig. 7, wobei das Bauteil zum Verrasten des Wischblatts in seiner Raststellung gelangt ist und

Figur 10 einen Schnitt durch die Anordnung gemäß Fig. 9 entlang der Linie X-X.

### Beschreibung des Ausführungsbeispiels

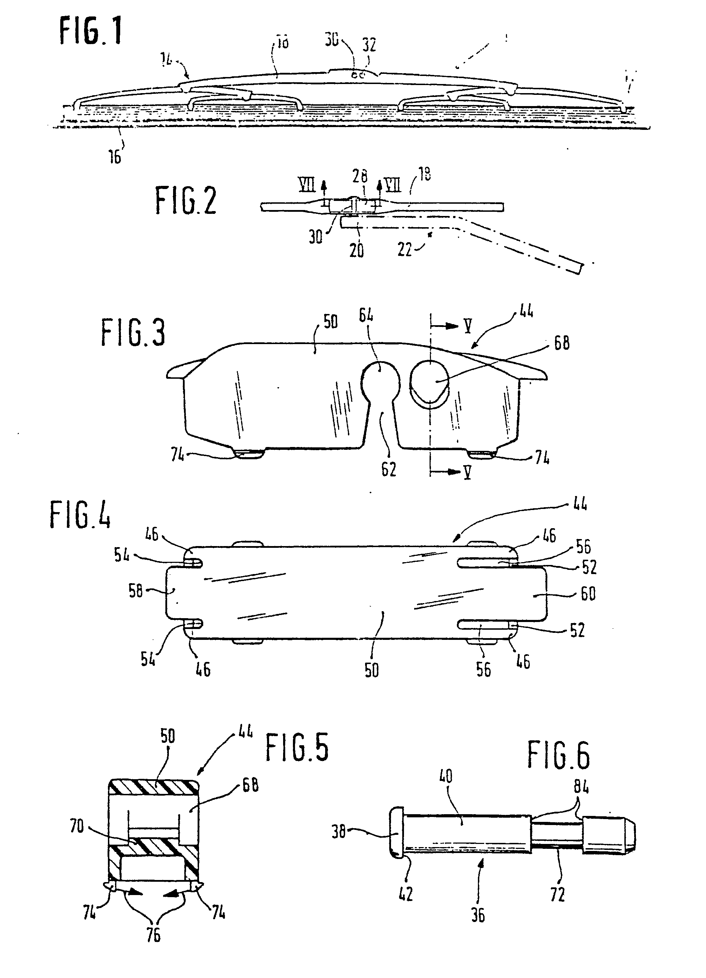

Ein zu der erfindungsgemäßen Wischvorrichtung gehörendes Wischblatt 10 weist eine gummielastische Wischleiste 12 auf, welche von einem mehrgliedrigen Traggestell 14 gehalten ist. Die Wischleiste 12 liegt mit ihrer Wischlippe auf einer Oberfläche der zu wischenden Scheibe 16 auf. Das Traggestell 14 des Wischblatts 10 hat einen im Querschnitt U-förmigen Hauptbügel 18, welcher an dem freien Ende 20 eines pendelnd angetriebenen Wischarms 22 angeschlossen ist (Fig. 1 und 2). Wie insbesondere aus den Fig. 2 und 7 bis 10 ersichtlich ist, ist der die beiden U-Schenkel 24 des Hauptbügels 18 verbindende Steg 26 im Mittelbereich des Hauptbügels 18 entfernt, so daß eine Öffnung 28 gebildet ist. Im Bereich der Öffnung 28 ist zwischen den beiden U-Schenkeln 24 ein Anschlußsteg in Form eines Nietbolzens 30 angeordnet, an welchem beispielsweise eine Rastfeder zum Anschließen eines Wischerarms mit hakenförmigen Ende angelenkt werden kann.

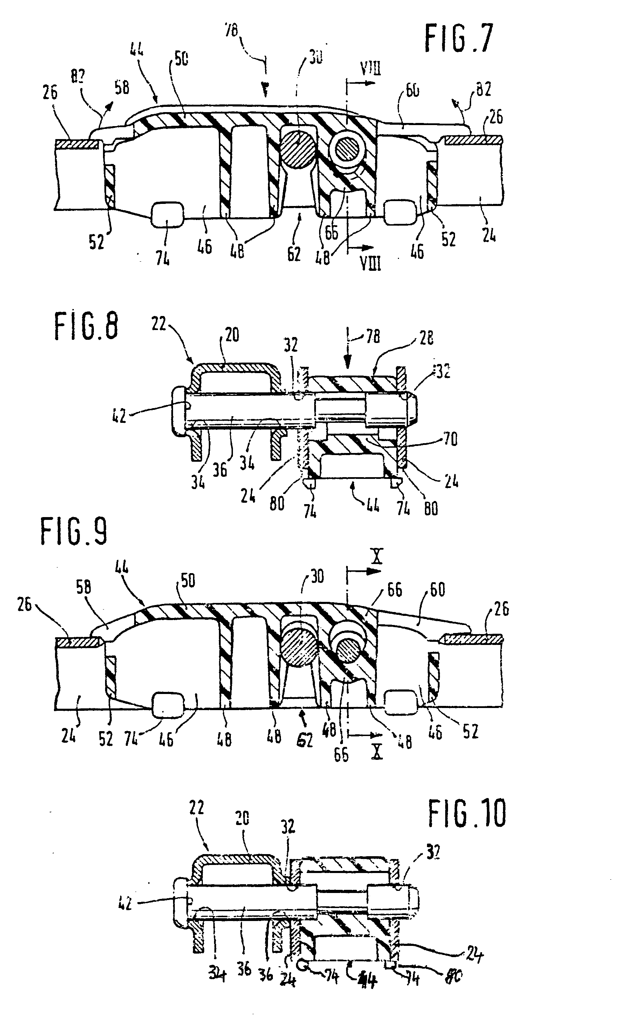

Zum gelenkigen Verbinden des Wischblatts 10 mit dem freien Ende 20 des Wischarms 22 weist der Hauptbügel 18 im Bereich seiner Öffnung 28 eine Lagerbohrung 32 auf, welche beide U-Schenkel 16 des Hauptbügels 18 durchdringt (Fig. 1, 8 und 10). Eine gleichgroße Aufnahmebohrung 34 befindet sich ferner im freien Ende 20 des Wischarms 22. Die Lagerbohrung 32 und die Aufnahmebohrung 34 sind quer zur Längserstreckung des Wischblatts 10 bzw. des Wischarms 22 angeordnet. Die Lagerbohrung 32 und die Aufnahmebohrung 34 dienen zur Aufnahme eines Gelenkbolzens 36 (Fig. 6), der in seinem Durchmesser so bemessen ist, daß sich das Wischblatt 10 gegenüber dem Wischerarm 22 um die Achse des Gelenkbolzens 36 schwenken läßt. Wie insbesondere aus Fig. 2 ersichtlich ist, sind das Wischblatt 10 und der Wischarm 22 in Betrieb der Wischvorrichtung nebeneinander angeordnet und der Gelenkbolzen 36 befindet sich in einer parallel zur Wischebene liegenden Ebene. Das andere, nicht dargestellte Ende des Wischarms 22 ist mit einer pendelnd angetriebenen Welle wirkverbunden. Der Gelenkbolzen 36 ist an seinem einen Ende mit einer Verdickung 38 versehen, welche zum Schaft 40 des Gelenkbolzens eine Anschlagschulter 42 hat. Wie die Fig. 8 und 10 zeigen, ist der Gelenkbolzen 36 von der vom Wischblatt 10 abgewandten Seite aus in die Aufnahmebohrung 34 des freien Wischarmendes 22 soweit eingeführt, daß die Schulter 42 der Verdickung 38 an dem Wischarm 22 zur Anlage kommt. Auf das von der Verdickung 38 abgewandte Ende des Gelenkbolzens 36 wird das Wischblatt 10 aufgeschoben, wobei das freie Ende des Gelenkbolzens 36 in der Lagerbohrung 32 der U-Schenkel 24 des Hauptbügels 18 liegt. Die Verdickung 38 des Gelenkbolzens 36 bildet eine erste Sicherung, welche ein unbeabsichtigtes herauswandern des Gelenkbolzens 36 aus Lagerbohrung 32 des Wischblatts bzw. der Aufnahmebohrung 34 des Wischarms verhindert.

Die zweite Sicherung für den Gelenkbolzen 36 ist durch ein Bauteil 44 gebildet, welches anhand der Fig. 3 bis 5 erläutert werden soll. Das Bauteil 44 hat einen im wesentlichen U-förmigen Querschnitt und die seitlichen Wände 46 des Bauteils 44 sind durch vier mit Abstand voneinander angeordnete Rippen 48 versteift (Fig. 7 und 9). Das Bauteil 44 ist aus einem elastischen Kunststoff hergestellt und die zwischen den Rippen 48 befindlichen Bereiche der Wände 46 sind elastisch auslenkbar. Die Wände 46 des Bauteils 44 sind durch ein Basisteil 50 miteinander verbunden, an welches auch die Versteifungsrippen 48 angeformt sind. Ferner weist das Bauteil 44 noch in seinen beiden Endbereichen jeweils eine Stützrippe 52 auf, die lediglich mit den Wänden 46 verbunden ist. Das Basisteil 50 des Bauteils 40 ist über die Stützrippen 52 hinaus verlängert. Wie Fig. 4 zeigt ist das Basisteil im Bereich dieser Enden durch randoffene Trennschlitze 54 und 56 gegenüber den Wänden 46 freigelegt, so daß sich mit Blattfedern vergleichbare elastische Lappen 58 und 60 ergeben. Zwischen den beiden inneren Rippen 48 weist das Bauteil 44 eine zu der Seite des Bauteils randoffene Rastausnehmung 62 auf, welche von dem Basisteil 50 abgewandt ist. Die Rastausnehmung 62 hat einen von außen nach innen konvergierenden Einlaufkanal, der sich zu einer langlochartigen Lagerausnehmung 64 erweitert. Die beiden Versteifungsrippen 48, welche nahe dem Federlappen 60 liegen, sind weitgehend miteinander verbunden, so daß das Bauteil 44 in diesem Bereich massiv ausgebildet ist. In diesem Massivbereich 66 ist das Bauteil 44 mit einem Durchbruch 68 versehen, der sich ebenso wie die Rastausnehmung 62 mit der Lagerausnehmung 64 durch die beiden U-Wände 46 des Bauteils 44 hindurcherstreckt. Der Durchbruch 68 im Massivbereich 66 hat einen langlochartigen Querschnitt und die Breite dieses Langlochs ist auf den Durchmesser des Gelenkbolzenschafts 40 abgestimmt. Das größere Maß des Langlochs 68 erstreckt sich im wesentlichen quer zur Länge des Basisteils 50. Auf der von dem Basisteil 50 abgewandten Seite ist das Langloch 68 mit Vorsprung 70 versehen, dessen Breite der Breite einer Ringnut 72 im Schaft 40 des Gelenkbolzens 36 angepaßt ist. Weiter weist das Bauteil 44 an den elastisch auslenkbaren Wandbereichen 46 Rasthaken 74 auf, die zusammen mit dem betreffenden Wandbereichen 46 auslenkbar sind.

Die Montage der erfindungsgemäßen Wischvorrichtung ist im folgenden beschrieben. Das Bauteil 44, dessen Breite dem Abstand zwischen den beiden U-Schenkeln 24 des Hauptbügels 18 angepaßt ist wird in die Öffnung 28 des Hauptbügels 18 so eingesetzt, daß der konvergierende Bereich der Rastausnehmung 62 auf dem Nietbolzen 30 des Hauptbügels 18 aufsitzt. Nun müssen die Rasthaken 74 in Richtung der Pfeile 76 (Fig. 5) ausgelenkt werden, wonach das Bauteil 44 in Richtung des Pfeils 78 (Fig. 7) in die Öffnung 28 eingesetzt werden kann. Während des Montageschritts gibt das Bauteil 44 in dem über den Durchbruch 68 liegenden Bereich des Basisteils 50 soviel elastisch nach, daß der Nietbolzen 30 in die Lageausnehmung 64 gelangen kann. Danach federt das Bauteil 44 wieder zurück, so daß es auf dem Nietbolzen 30 aufgerastet ist. Durch die langlochähnliche Ausbildung der Lagerausnehmung 64 ist jedoch eine gewisse Verschiebung des Bauteils 44 gegenüber dem Nietbolzen 30 in Richtung des Pfeils 78 bzw. der diesem entgegengesetzten Richtung möglich. In dieser Montagestellung hintergreifen die Rasthaken 74 der Wände 46 die von Steg 26 des Hauptbügels 18 abgewandten Kanten 80 der U-Schenkel 24 (siehe dazu die Fig. 8 und 10). Wie insbesondere aus den Fig. 7 und 9 ersichtlich ist, sind die federnden Lappen 58 und 60 so lang, daß sie ein Teilstück des Stegs 26 des Hauptbügels 18 übergreifen. Die Abstimmung zwischen den Rasthaken 74 und den federnden Lappen 58 und 60 ist so getroffen, daß in der in Fig. 10 gezeigten Montagestellung des Bauteils 44 die federnden Lappen 58 und 60 vorgespannt sind. Die federnden Lappen 58 und 60 drücken also mit einer gewissen Vorspannkraft auf den Steg 26 des Hauptbügels 18.

Wenn das Wischblatt 10 nun in der beschriebenen Weise vorbereitet worden ist, kann die Verbindung zwischen dem Wischarm 22 und dem Wischblatt 10 erfolgen. Dazu wird zunächst der Gelenkbolzen 30 wie oben beschrieben in die Aufnahmebohrung 34 des freien Wischerarmendes 20 gesteckt, bis er mit der Schulter 42 der Verdickung 38 an der Seite des Wischarms 22 anliegt. Nun ragt das freie Ende des Gelenkbolzens 36 aus der von der Verdickung 38 abgewandten Seite des Wischarms 22 heraus. Auf dieses freie Ende des Gelenkbolzens 32 wird nun das Wischblatt 10 aufgesteckt. Dazu wird das freie Ende des Bolzenschafts 40 in die Lagerbohrung 32 des Hautbügels 18 hineingesteckt. Die Anordnung des Durchbruchs 68 im Massivbereich 66 des Bauteils 44 ist so getroffen, daß der Vorsprung 70 des Durchbruchs 68 ein Durchstecken des Gelenkbolzenschafts 40 durch den Hauptbügel 18 verhindert. Durch Drücken auf den Basisteil 50 des Bauteils 44 in Richtung des Pfeiles 78 wird nun unter weiterer Auslenkung der Federlappen 58 und 60 in Richtung der Pfeile 82 die Vorspannung in den Lappen weiter erhöht, und das Bauteil 44 in eine Stellung überführt, die der in den Fig. 7 und 8 gezeigten Stellung entspricht. In dieser Stellung ist es nun möglich den Schaft 40 des Gelenkbolzens 36 durch den Hauptbügel 18 des Wischblatts 10 hindurchzustecken. Bei der Darstellung in Fig. 8 ist

dieser Durchsteckvorgang noch nicht ganz abgeschlossen. Wenn das Wischblatt 10 nun ordnungsgemäß mit dem Wischarm 22 verbunden ist (Fig. 10) und die Belastung des Bauteils 44 in Richtung des Pfeils 78 aufgehoben wird, zwingt die in den Federlappen 58 und 60 aufgebaute Vorspannung den Vorsprung 70 des Durchbruchs 68 in die Ringnut 72 des Gelenkbolzenschafts 40. In dieser Montagestellung ist das Bauteil wieder durch die Rasthaken 74 und die mit einer etwas geringeren Vorspannung auf den Steg 26 des Hauptbügels 18 drückenden Federlappen 58 und 60 gegen Kippbewegungen gesichert. Das Bauteil 44 bildet also ein Mittel zum Sichern des Gelenkbolzens in der Lagerbohrung 32 des Hauptbügels 18. Die Sicherung des Gelenkbolzens 36 in der Lagerbohrung 32 wird durch die Seitenwangen 84 der Ringnut 72 und durch den Vorsprung 70 übernommen, welcher federnd in die Ringnut 72 einrasten und dort mit den Seitenwangen 84 der Ringnut 72 zusammenwirkt. Die Ringnut 72 im Gelenkbolzenschaft 40 liegt also in Montagestellung zwischen den beiden U-Schenkeln 24 des Hauptbügels 18. Da die in den federnden Lappen 58 und 60 bei der Montage des Wischblatts 10 auf dem Gelenkbolzen 36 aufgebaute Rückstellkraft entgegen der Richtung des Pfeils 78 wirkt, ist der mit der Ringnut 72 zusammenwirkende Vorsprung 70 des Durchbruchs 68 an dem der Scheibe 16 zugewandten Wandabschnitt des Durchbruchs 68 angeordnet. Die Ausgestaltung der Lagerausnehmung 64 für den Nietbolzen 30 und die Lage des langlochförmigen Durchbruchs 68 sind so ausgeführt, daß das Bauteil 44 in eine zur zu wischenden Scheibe 16 senkrechten Richtung verschiebbar ist.

Zum Lösen des Wischblatts 10 von dem Wischarm 22 muß das Bauteil 44 in Richtung des Pfeils 78 belastet werden, bis der Vorsprung 70 des Durchbruchs 68 aus der Ringnut 72 des Gelenkbolzens 36 gelangt. Danach kann das Wischblatt 10 von dem Wischarm 22 abgenommen werden, indem es vom Gelenkbolzenschaft 40 gezogen wird.

**Ansprüche**

1. Wischvorrichtung für Scheiben von kraftfahrzeugen, mit einem pendelnd angetriebenen Wischerarm (22) und einem neben diesen angeordneten, mit diesem über einen in der Pendelebene liegenden, sich quer zum Wischerarm (22) erstreckenden Gelenkbolzen (36) gelenkig verbundenen, mit einem im Querschnitt U-förmig ausgebildeten Gestellteil (18) versehenen Wischblatt (10), bei dem im Mittelbereich des Gestellteils (18) zur Bildung einer Öffnung (28) der die beiden U-Schenkel (24) verbindende Steg (26) entfernt ist, die beiden U-Schenkel (24) sowie der Wischerarm (22) Lagerbohrungen (32 bzw. 34) für den losen Gelenkbolzen (36) aufweisen und der an seinem aus der vom Wischblatt (10) abgewandten Seite des Wischerarm (22) heraustretenden Ende mit einer Verdickung (38) versehene Gelenkbolzen (36) mittels eines in die Öffnung (28) einsetzbaren Bauteils (44) gegen axiales Verschieben gesichert ist, wobei dieses Bauteil (44) in der Öffnung (28) mittels einer Halterung befestigt ist, dadurch gekennzeichnet, daß für die Halterung des Bauteils (44) im Bereich der Öffnung (28) ein in beiden U-Schenkeln (24) gehaltener Bolzen (30) dient.

2. Wischvorrichtung nach Anspruch 1, dadurch gekennzeichnet, daß das Bauteil (44) einen langlochförmigen Durchbruch (68) für den Gelenkbolzen (36) hat.

3. Wischvorrichtung nach einem der Ansprüche 1 oder 2, dadurch gekennzeichnet, daß das Bauteil (44) eine Lagerausnehmung (64) für den festen Bolzen (30) aufweist.

4. Wischvorrichtung nach Anspruch 3, dadurch gekennzeichnet, daß die Lagerausnehmung (64) über eine von dieser aus konvergierende Rastausnehmung (62) randoffen ist.

5. Wischvorrichtung nach einem der Ansprüche 2 bis 4, dadurch gekennzeichnet, daß der Durchbruch (68) mit einem Vorsprung (70) versehen ist, der mit einer Ringnut (72) im Gelenkbolzenschaft (40) zusammenarbeitet.

6. Wischvorrichtung nach Anspruch 5, dadurch gekennzeichnet, daß das Bauteil (44) sich an dem Wischblatt (10) abstützende Federmittel (58, 60) hat, welche den Vorsprung (72) des Durchbruchs (68) in die Ringnut (72) des Gelenkbolzenschafts (40) zwingen.

7. Wischvorrichtung nach Anspruch 6, dadurch gekennzeichnet, daß das Bauteil (44) aus einem elastischen Kunststoff gefertigt ist und daß es sich mit federnden Lappen (58, 60) an dem die U-Schenkel (24) des Gestellteils (18) verbindenden Steg (26) vorgespannt abstützt.

8. Wischvorrichtung nach Anspruch 7, dadurch gekennzeichnet, daß sich die Federlappen (58, 60) des Bauteils (44) auf der von der zu wischenden Scheibe (16) abgewandten Seite des Stegs (26) abstützen und daß der Vorsprung (70) des Durchbruchs (68) an dem der Scheibe (16) zugewandten Wandabschnitt des Durchbruchs (68) angeordnet ist.

9. Wischvorrichtung nach Anspruch 8, dadurch gekennzeichnet, daß das Bauteil (44) im Bereich des Durchbruchs (68) massiv ausgebildet und in seinen anderen Bereichen mit Versteifungsrippen (48, 52) versehen ist.

10. Wischvorrichtung nach Anspruch 9, dadurch gekennzeichnet, daß die zwischen den Rippen (48, 52) vorhandenen Wandabschnitte (46) elastisch auslenkbar und an ihren freien Enden mit Rasthaken (74) versehen sind, welche bei vorgespannten Federlappen (58, 60) die von dem Steg (26) des Gestellteils (18) abgewandten Kanten (80) der U-Schenkel (24) übergreifen.

**Claims**

1. A wiper device for motor vehicle screens, comprising a wiper arm (22) driven in oscillation and a wiper blade (10) provided with a frame portion (18) U-shaped in cross section, arranged adjacent to the wiper arm and pivotally connected to the wiper arm by a pivot pin (36) lying in the plane of oscillation and extending transversely with respect to the wiper arm (22), in which, for forming an opening (28) which is remote from the web (26) connecting the two U-limbs (24), the two U-limbs (24) as well as the wiper arm (22) have bearing bores (32 and 34) in the central region of the frame portion (18) for the loose pivot pin (36) and the pivot pin (36) provided with a thickened portion (38) at its end projecting from the side of the wiper arm remote from the wiper blade (10) is secured against axial displacement by means of a component (44) which can be inserted in the opening (28), wherein the said component (44) is fixed in the opening (28) by means of a mount, characterised in that, a pin (30) held in the two U-limbs (24) serves for the mounting of the component (44) in the region of the opening (28).

2. A wiper device according to claim 1, characterised in that, the component (44) has a passage (68) in the form of an elongate hole for the pivot pin (36).

3. A wiper device according to one of claims 1 or 2, characterised in that, the component (44) has a bearing recess (64) for the fixed pin (30).

4. A wiper device according to claim 3, characterised in that, the bearing recess (64) is open at its edge by a locking recess (62) converging to the bearing recess.

5. A wiper device according to one of claims 2 to 4, characterised in that, the passage (68) is provided with a projection (70) which co-operates with an annular groove (72) in the shank (40) of the pivot pin.

6. A wiper device according to claim 5, characterised in that, the component (44) has spring means (58, 60) abutting the wiper blade (10) and which urge the projection (70) of the passage (68) into the annular groove (72) of the pivot pin shank (40).

7. A wiper device according to claim 6, characterised in that, the component (44) is made from an elastic plastics material and that it is supported in a pretensioned manner on the web (26) connecting the U-limbs (24) of the frame portion (18), by resilient lugs (58, 60).

8. A wiper device according to claim 7, characterised in that, the spring lugs (58, 60) of the component (44) are supported by the side of the web (26) remote from the screen (16) to be wiped and that the projection (70) of the passage (68) is arranged on the wall section of the passage (68) facing the screen (16).

9. A wiper device according to claim 8, characterised in that, in the region of the passage (68), the component (44) is made solid and is provided in its other regions with stiffening ribs (48, 52).

10. A wiper device according to claim 9, characterised in that, the wall sections (46) provided between the ribs (48, 52) can be elastically deflected and are provided at their free ends with latching hooks (74) which overlap the edges (80) of the U-limbs (24) remote from the web (26) of the frame portion (18) when the spring lugs (58, 60) are pre-tensioned.

**Revendications**

1. Dispositif d'essuyage pour glaces de véhicules automobiles, avec un bras d'essuyage (22) à entraînement pendulaire et un balai d'essuyage (10) disposé à côté de celui-ci, assemblé avec lui à articulation par un axe d'articulation (36) situé dans le plan de mouvement et s'étendant transversalement au bras d'essuyage (22), balai muni d'une partie de châssis (18) agencée avec une section en forme de U, balai dans lequel, dans la zone médiane de la partie de châssis (18), l'âme (26) reliant les deux branches (24) du U est éliminée pour former une ouverture (28), les branches (24) du U ainsi que le bras d'essuyage (22) présentant des perçages de palier (32, 34) pour l'axe d'articulation mobile (36), cet axe d'articulation (36), muni d'un épaississement (38) à son extrémité sortant du côté du bras d'essuyage (22) situé à l'opposé du balai d'essuyage (10), étant maintenu contre le déplacement axial au moyen d'un élément de construction (44) s'introduisant dans l'ouverture (28), cet élément de construction (44) étant fixé dans l'ouverture (28) au moyen d'un moyen de retenue, caractérisé en ce qu'une cheville (30) maintenue dans les deux branches (24) du U sert pour la retenue de l'élément de construction (44) dans le domaine de l'ouverture (28).

2. Dispositif d'essuyage selon la revendication 1, caractérisé en ce que l'élément de construction (44) comporte un passage (68) en forme de perçage oblong pour l'axe d'articulation (36).

3. Dispositif d'essuyage selon l'une des revendications 1 ou 2, caractérisé en ce que l'élément de construction (44) comporte un évidement de montage (64) pour la cheville fixe (30).

4. Dispositif d'essuyage selon la revendication 3, caractérisé en ce que l'évidement de montage (64) est ouvert en bordure par un évidement d'enclenchement (62) convergent vers lui.

5. Dispositif d'essuyage selon l'une des revendications 2 à 4, caractérisé en ce que le passage (68) est muni d'une saillie (70) coopérant avec une rainure annulaire (72) du fût (40) de l'axe d'articulation.

6. Dispositif d'essuyage selon la revendication 5, caractérisé en ce que l'élément de construction (44) comporte des moyens élastiques (58, 60) s'appuyant sur le balai d'essuyage (10), moyens forçant la saillie (72) du passage (68) dans la rainure annulaire (72) du fût (40) de l'axe d'articulation.

7. Dispositif d'essuyage selon la revendication 6, caractérisé en ce que l'élément de construction (44) est fabriqué en une matière synthétique élastique et en ce qu'il s'appuie sous précontrainte avec des pattes élastiques (58, 60) sur l'âme (26) reliant les branches (24) du U de la partie de châssis (18).

8. Dispositif d'essuyage selon la revendication 7, caractérisé en ce que les pattes élastiques (58, 60) de l'élément de construction (44) s'appuyent sur le côté de l'âme (26) situé à l'opposé de la glace à essuyer (16) et en ce que la saillie (70) du passage (68) est disposée sur la partie de paroi du passage (68) dirigée vers la glace (16).

9. Dispositif d'essuyage selon la revendication 8, caractérisé en ce que l'élément de construction (44) est de réalisation massive dans le domaine du passage (68) et est muni de nervures de raidissement (48, 52) dans ses autres domaines.

10. Dispositif d'essuyage selon la revendication 9, caractérisé en ce que les parties de paroi (46) existant entre les nervures (48, 52) peuvent se déplacer élastiquement et sont munies à leurs extrémités libres de crochets d'enclenchement (74) qui, lorsque les pattes élastiques (58, 60) sont précontraintes, viennent en prise sur les bords (80) des branches (24) du U situés à l'opposé de l'âme (26) de la partie de châssis (18).

**FIG.1**

**FIG.2**

**FIG.3**

**FIG.4**

**FIG.5**

**FIG.6**

FIG.7

FIG.8

FIG.9

FIG.10